# EUROPEAN PATENT SPECIFICATION

(11) **EP 2 915 428 B1**
(45) Date of publication and mention of the grant of the patent: **06.09.2017**
(21) Application number: 13851056.5
(22) Date of filing: 25.10.2013
(51) Int. Cl.: A23L 2/44, A23L 2/38, A23C 9/13, A23C 9/133, A23C 3/08, A23L 2/66, A23L 2/68

(54) **CONCENTRATED-TYPE ACIDIC MILK BEVERAGE, AND METHOD FOR MANUFACTURING SAME**
KONZENTRIERTES SAUERMILCHGETRÄNK UND VERFAHREN ZUR HERSTELLUNG DAVON
BOISSON À BASE DE LAIT ACIDE DE TYPE CONCENTRÉ ET SON PROCÉDÉ DE FABRICATION

(30) Priority: 31.10.2012 JP 2012240632; 28.06.2013 JP 2013137007
(43) Date of publication of application: 09.09.2015
(73) Proprietor: Asahi Soft Drinks Co., Ltd., Tokyo 130-8602 (JP)
(72) Inventor: KATAYANAGI, Satoru, Sagamihara-shi, Kanagawa 252-0206 (JP)
(74) Representative: D Young & Co LLP
(86) International application number: PCT/JP2013/078910
(87) International publication number: WO 2014/069346

(56) References cited:
- WO-A1-2009/037274
- JP-A- H0 767 596
- JP-A- H11 187 851
- JP-A- 2009 089 625
- JP-A- 2009 089 626
- JP-A- 2009 089 626
- JP-A- 2010 517 571
- JP-A- 2010 538 631
- US-A1- 2007 148 307
- US-A1- 2008 193 616
- US-A1- 2008 206 415
- KYOSUKE KAWAGUCHI ET AL.: 'Effect of lactic acid bacteria and yeast on the fermented milk taste' JAPAN SOCIETY FOR BIOSCIENCE, BIOTECHNOLOGY, AND AGROCHEMISTRY TAIKAI KOEN YOSHISHU vol. 2012, 05 March 2012, page 2J15P11, XP008179431

## Description

### Technical Field

The present invention relates to a concentrate-type milk-based acidic beverage that contains milk, in which the growth of microorganisms is inhibited after a package is opened and a method for producing the same.

### Background Art

A beverage product contains nutritional components such as sugar, proteins, vitamins, and minerals. Accordingly, it constitutes an environment suitable for the growth of microorganisms such as yeasts and molds. A beverage product that had been spoiled because of the growth of microorganisms disadvantageously undergoes, for example, development of an unusual taste or odor, production of ethanol, fermentation accompanied by gas evolution, or precipitation of components. Accordingly, it is vital to inhibit the growth of microorganisms and to prevent beverage products from being spoiled during the production and distribution of beverage products.

In particular, it is difficult to finish drinking a concentrate-type beverage product that is diluted with water or the like at the time of ingestion shortly after it has been opened, because of its form. In addition, the storage period until such beverage is completely consumed after a package is opened is lengthy. Accordingly, it is more likely to be contaminated by microorganisms after a package is opened than usual forms of beverage products. When such a concentrate-type beverage product contains a plant- or animal-derived solid component, such as nutrient milk or fruit juice, in addition, the risk of contamination further enhances. Accordingly, development of a technique that would effectively prevent the growth of microorganisms in such a concentrate-type beverage product after a package is opened (i.e., secondary contamination) has been awaited.

As means for preventing a food product from being spoiled by microorganisms and improving storage properties, in general, techniques such as those that make use of preservatives or acidifiers, temperature control such as heat sterilization or low-temperature distribution, adjustment of pH level, or adjustment of sugar content (osmotic pressure) have been known. For example, the usage standards and the target food products of some food additives are restricted, and examples of preservatives include benzoic acid, parabens, fatty acid esters, organic acids, and natural extracts (Non-patent Document 1). In recent years, techniques such as gas displacement and ethanol addition have been developed and put to practical use. While a method of removing oxygen from a packaging and storage environment is effective for molds, such method is less effective for yeasts, which can grow under anaerobic conditions. Accordingly, such method is known to cause deterioration of food quality because of the expansion of a package resulting from carbon dioxide production, generation of an alcohol odor or ethyl acetate odor, and the like (Non-patent Document 2).

Both benzoic acid and polylysine are known to have strong antimicrobial effects against food-spoiling microbial cells, such as bacteria, molds, and yeasts, and they are known to serve as food preservatives (Patent Document 1). Such substances are used for beverage products. For example, Patent Document 2 discloses an acidic beverage composition having a reduced off-flavor and improved microbial stability by comprising a beverage component and a preservative system containing about 0.1 ppm to about 150 ppm polylysine and about 10 ppm to about 1,000 ppm benzoic acid. In addition, Patent Document 3 discloses a method for preserving acidic beverages using benzoic acid and benzoate, in addition to polylysine in combination with fatty acid ester of hydroxycarboxylic acid or glycerol. However, target beverage products disclosed in the documents mentioned above are not concentrate-type acidic beverages that contain milk. When polylysine is added to a food product with high protein content, in addition, it is adsorbed to a protein while acting on microorganisms. Thus, antimicrobial effects thereof are known to cause deterioration (Non-patent Document 3).

Up to the present, the pH level has been maintained at a low level or sugar content (osmotic pressure) has been maintained at a high level in order to prevent concentrate-type acidic beverages that contain milk from being contaminated by microorganisms. However, osmotolerant (glucose-tolerant) yeasts are known as representative yeasts that spoil concentrate-type beverages with high sugar content. The growth of such yeasts cannot be inhibited by adjusting the pH level or sugar content or with the use of a preservative as described above. That is, it is not yet possible to effectively prevent a beverage product from being contaminated by microorganisms (secondary contamination) after a package is opened.

### Prior Art Documents

Patent Documents JP 2009 089626 describes a concentrated milk based acidic beverage. No preservatives in the products. Polylysine and benzoic acid are mentioned in a long list. US2007148307 discloses a concentrated beverages with benzoic acid as preservative. US 2008/19361 and WO 2009/037274 disclose the use of polylysine as preservative in beverages.
Patent Document 1: JP H07-67596 A (1995)
Patent Document 2: JP 2010-517571 A
Patent Document 3: JP 2010-538631 A

### Non-Patent Documents

Non-patent Document 1: Microbial sterilization Practical Data Collection, Science Forum Co., Ltd.; first issue: August 11, 2005
Non-patent Document 2: Kagaku To Seibutsu (Chemistry and Biology), Vol. 30, No. 9, 1992
Non-patent Document 3: Changes in *Wisteria monocytogenes* bacterial count in livestock and fishery food products to be eaten unheated, such as *kamaboko,* and growth inhibition by polylysine and sucrose fatty acid ester, Ito et al., Nodai Research Institute, Tokyo, Research Report No. 6: 1-9, 2011

### Summary of Invention

### Problem to be Solved by the Invention

It is an object of the present invention to provide an effective means for inhibiting the growth of microorganisms in a concentrate-type milk-based acidic beverage that contains milk after a package is opened.

### Means for Solving the Problem

The present inventors have conducted concentrated studies in order to attain the above object. As a result, they discovered that the growth of osmotolerant yeasts, which could not be resolved by conventional techniques, could be inhibited to a significant extent with the addition of ε-polylysine and benzoic acid to a concentrate-type acidic beverage that contains milk. This has led to the completion of the present invention.

Specifically, the present invention includes the following.
(1) A concentrate-type milk-based acidic beverage comprising (A) milk, (B) ε-polylysine, and (C) at least one member selected from among benzoic acid, p-hydroxybenzoic acid esters, and a salt of either thereof, wherein the milk solids-non-fat content is 1.5% to 4.5% by weight and the Brix value is 40 to 60.
(2) The milk-based acidic beverage according to (1), wherein the pH level of the beverage is 3.5 or less.
(3) The milk-based acidic beverage according to (1) or (2), wherein the ε-polylysine concentration is 50 to 750 ppm.
(4) The milk-based acidic beverage according to any of (1) to (3), wherein the concentration of at least one member selected from among benzoic acid, p-hydroxybenzoic acid esters, and a salt of either thereof is 200 to 700 ppm.
(5) The milk-based acidic beverage according to any of (1) to (4), wherein the milk is acidic milk.
(6) The milk-based acidic beverage according to any of (1) to (5), which further comprises fruit juice or vegetable juice.
(7) The milk-based acidic beverage according to any of (1) to (6), which is filled into a package.
(8) A method for producing a concentrate-type milk-based acidic beverage, comprising
   a step of adding ε-polylysine and at least one member selected from among benzoic acid, p-hydroxybenzoic acid esters, and a salt of either thereof to a raw material of a milk-containing beverage,
   a step of adjusting the pH level of the beverage to 3.5 or less, and
   a step of adjusting the Brix value of a beverage to 40 to 60.
(9) A method for inhibiting the growth of microorganisms in a concentrate-type milk-based acidic beverage, which is characterized by comprising adding ε-polylysine and at least one member selected from among benzoic acid, p-hydroxybenzoic acid esters, and a salt of either thereof to a raw material of a milk-containing beverage, adjusting the pH level of the beverage to 3.5 or less, and adjusting the Brix value of a beverage to 40 to 60.
(10) The method according to (9), wherein the inhibition of the growth of microorganisms is the inhibition of the growth of osmotolerant yeasts after a package is opened.

This patent application claims priority from Japanese Patent Application No. 2012-240632 filed on October 31, 2012 and Japanese Patent Application No. 2013-137007 filed on June 28, 2013, and includes part or all of the contents as disclosed in the descriptions thereof.

### Effects of the Invention

The present invention provides a concentrate-type milk-based acidic beverage that contains milk, in which the growth of microorganisms is inhibited after a package is opened.

### Brief Description of the Drawings

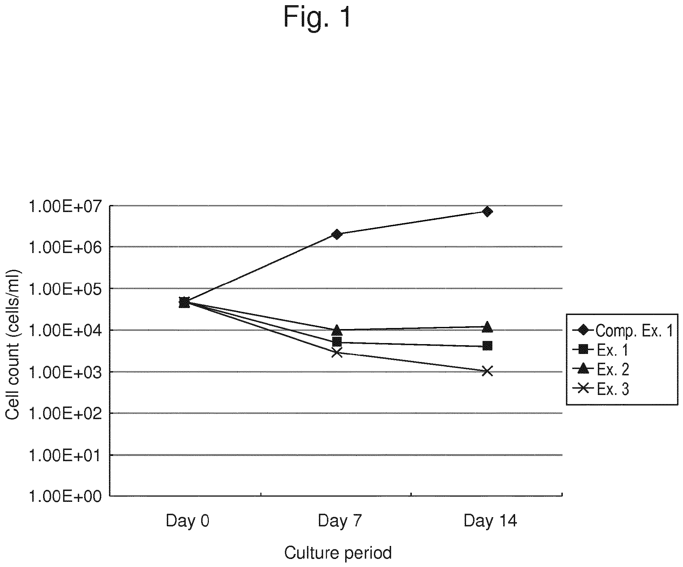

Fig. 1 shows the tests results regarding the growth of yeasts in the milk-containing acidic beverages produced in Examples 1 to 3 (with the addition of benzoic acid and ε-polylysine) and the milk-containing acidic beverage produced in Comparative Example 1 (with the addition of benzoic acid alone).

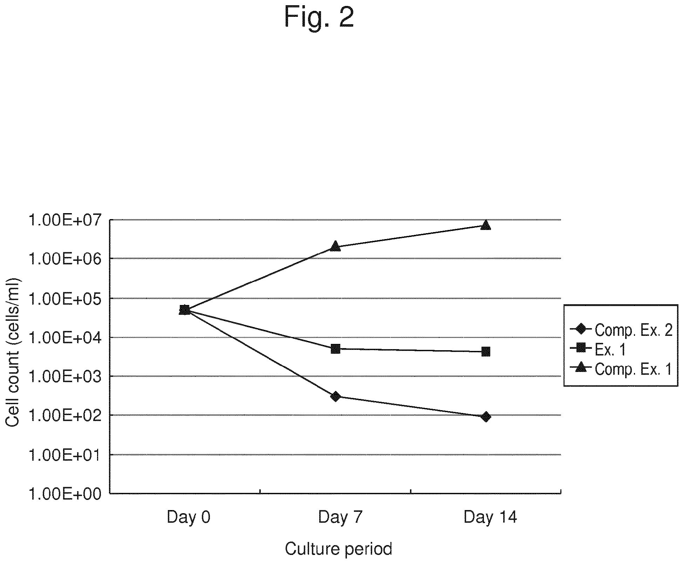

Fig. 2 shows the tests results regarding the growth of yeasts in the milk-containing acidic beverage produced in Example 1 (with the addition of benzoic acid and ε-polylysine), the milk-containing acidic beverage produced in Comparative Example 1, and the milk-free acidic beverage produced in Comparative Example 2 (with the addition of benzoic acid alone).

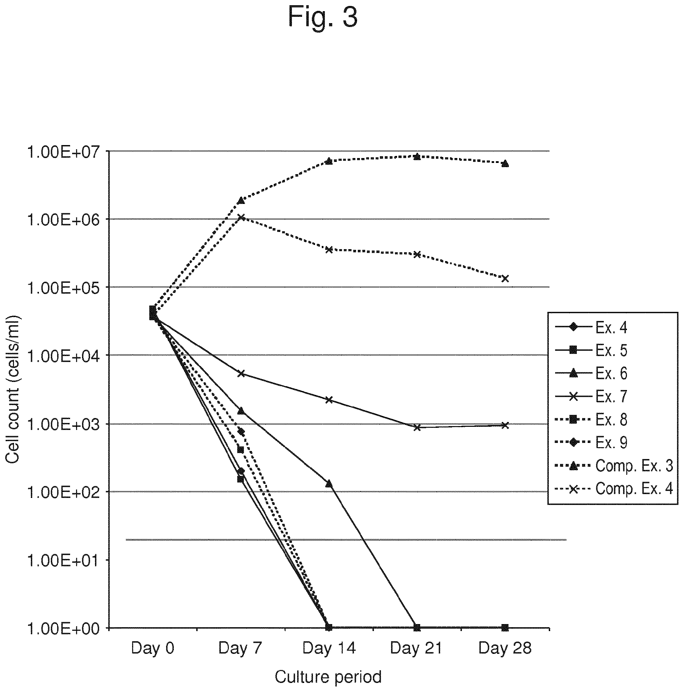

Fig. 3 shows the tests results regarding the growth of yeasts in the milk-containing acidic beverages produced in Examples 4 to 9 (with the addition of benzoic acid and ε-polylysine), the milk-containing acidic beverage produced in Comparative Example 3 (without the addition of benzoic acid or ε-polylysine), and the milk-containing acidic beverage produced in Comparative Example 4 (with the addition of benzoic acid and ε-polylysine, with a low sugar content).

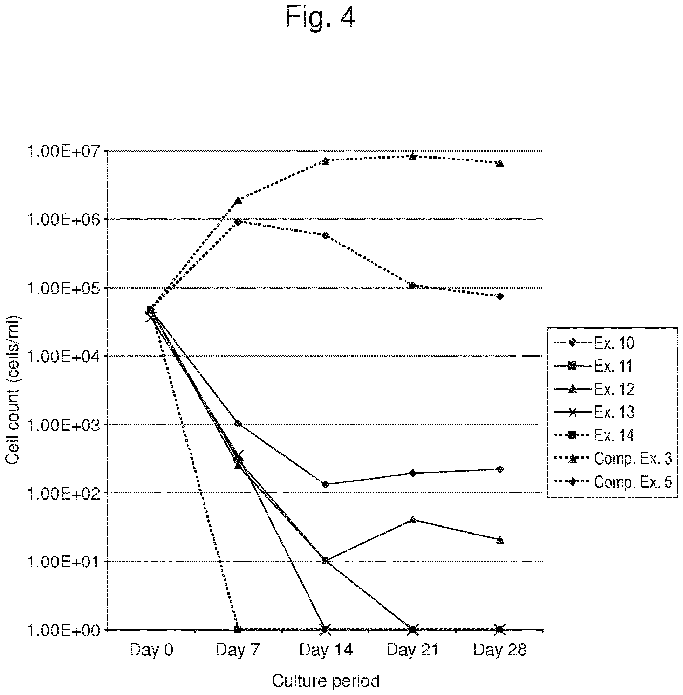

Fig. 4 shows the tests results regarding the growth of yeasts in the milk-containing acidic beverages produced in Examples 10 to 14 (with the addition of benzoic acid or p-hydroxybenzoic acid esters and ε-polylysine), the milk-containing acidic beverage produced in Comparative Example 3 (without the addition of benzoic acid or ε-polylysine), and the milk-containing acidic beverage produced in Comparative Example 5 (with the addition of benzoic acid and ε-polylysine, with a low sugar content).

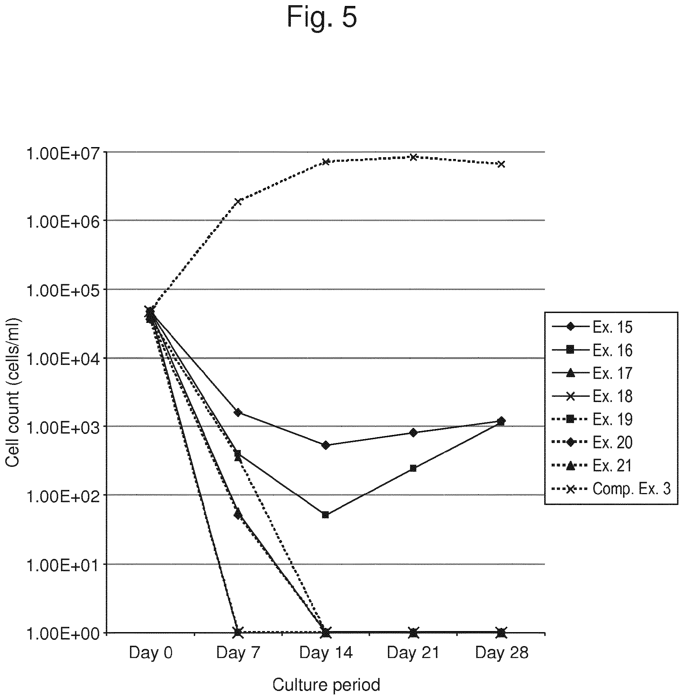

Fig. 5 shows the tests results regarding the growth of yeasts in the milk-containing acidic beverages produced in Examples 15 to 21 (with the addition of benzoic acid and ε-polylysine) and the milk-containing acidic beverage produced in Comparative Example 3 (without the addition of benzoic acid and ε-polylysine).

### Embodiments for Carrying out the Invention

The concentrate-type milk-based acidic beverage of the present invention (hereafter, it is also referred to as "the beverage of the present invention") comprises (A) milk, (B) ε-polylysine, and (C) at least one member selected from among benzoic acid, p-hydroxybenzoic acid esters, and a salt of either thereof. In the beverage of the present invention, the milk solids-non-fat content is 1.5% to 4.5% by weight, and the Brix value is 40 to 60.

The term "the beverage of the present invention" refers to a concentrate-type beverage, which is diluted to an adequate concentration with water or the like at the time of ingestion. Such beverage is not necessarily diluted, and it may be used in the form of syrup.

Any milk derived from an animal or plant can be used for Component (A) incorporated into the beverage of the present invention. Examples thereof include animal milk, such as cow milk, goat milk, ewe milk, and horse milk, and plant milk, such as soy milk, and cow milk is generally used. Such types of milk may be used alone or in combinations of two or more.

A form of a milk raw material is not particularly limited. For example, a milk raw material may be any of whole milk, skimmed milk, milk serum, and milk powder of any thereof, a lactoprotein concentrate, or milk reconstituted from concentrated milk. Such milk raw material may be used alone or in combinations of two or more.

Acidified milk can be incorporated into the beverage of the present invention. Acidified milk is prepared by adjusting the pH level to the acidic range, and it can be either fermented acidified milk produced by performing the step of fermentation with microorganisms or non-fermented acidified milk produced without performing the step of fermentation with microorganisms. Specific examples include acidified milk obtained by fermenting a milk raw material with microorganisms such as lactic bacteria or *Lactobacillus bifidus* in advance so as to generate an organic acid such as lactic acid, acidified milk obtained with the addition of an organic acid, such as lactic acid or citric acid, and an acid component, such as fruit juice, to a milk raw material, and a mixture thereof. When fermentation is carried out with microorganisms, a general fermentation technique employed for the production of fermented milk may be employed, and examples thereof include static fermentation, agitation fermentation, shake fermentation, and aeration fermentation. In general, fermentation may be carried out at 30°C to 40°C until the pH level reaches the acidic range.

The milk solids-non-fat (SNF) content in the beverage of the present invention is preferably 1.5% to 4.5% by weight, more preferably 2.0% to 4.0% by weight, and further preferably 2.0% to 3.0% by weight. When SNF is more than 4.5% by weight, it is difficult to stabilize a lactoprotein in a beverage. When SNF is less than 1.5% by weight, in contrast, milk flavor cannot be sufficiently felt. The milk solids-non-fat (SNF) content is determined by eliminating a moisture component and a fat component from components constituting milk, and it contains, as main components, a protein, a carbohydrate, a mineral, a vitamin, or other substances.

ε-Polylysine, which is Component (B) to be incorporated into the beverage of the present invention, is a homopolymer of L-lysines produced by *Actinomycetes* belonging to the genus *Streptomyces.* Such homopolymer comprises 25 to 35 L-lysines linearly bound to each other via amide bonds between amino groups at position ε and carboxyl groups at position α. Any ε-polylysine that can be used as a food additive can be incorporated into the beverage of the present invention. For example, a commercially available ε-polylysine, such as SunKeeper No. 381 (San-Ei Gen F.F.I., Inc.), can be used. The amount of ε-polylysine to be added to a beverage is not particularly limited, provided that effects of interest can be attained. Such amount may be adequately adjusted in accordance with the sugar content (Brix) or the milk solids-non-fat (SNF) content, and it is generally 50 to 750 ppm, preferably 50 to 500 ppm, more preferably 100 to 500 ppm, further preferably 200 to 500 ppm, and particularly preferably 250 to 500 ppm.

Component (C) to be incorporated into the beverage of the present invention; i.e., benzoic acid, p-hydroxybenzoaic acid esters, or a salt of either thereof, is not particularly limited, provided that it can be used as a food additive. Examples of p-hydroxybenzoic acid esters include methyl parahydroxybenzoate, ethyl parahydroxybenzoate, propyl parahydroxybenzoate, isopropyl parahydroxybenzoate, butyl parahydroxybenzoate, and isobutyl parahydroxybenzoate. When p-hydroxybenzoic acid esters are used, for example, a commercially available p-hydroxybenzoic acid ester preparation such as Neo Mekkins (Ueno Fine Chemicals Industry, Ltd.) can be used. Examples of salts of benzoic acid or p-hydroxybenzoic acid esters include sodium benzoate, sodium methyl parahydroxybenzoate, and sodium propyl parahydroxybenzoate. Such salts can be used alone or in combinations of two or more. The amount of "at least one member selected from among benzoic acid, p-hydroxybenzoic acid esters, and a salt of either thereof" to be added to the beverage is not particularly limited, provided that effects of interest are attained. For example, such amount is generally 200 to 700 ppm, preferably 300 to 650 ppm, and more preferably 400 to 600 ppm.

The proportion of Component (B) to Component (C) in the beverage of the present invention is generally 2 : 1 to 1:10, preferably 2 : 1 to 1: 5, and more preferably 2 : 1 to 1: 3.

Since the beverage of the present invention is in the form of a concentrate-type beverage, in general, the Brix value thereof is designed to be higher than that of a non-concentrated straight beverage. The Brix value (Bx) is the sugar refractometer index at 20°C. For example, it is the amount of solid content (Bx) measured at 20°C using a digital refractometer (Rx-5000, Atago Co., Ltd.). The beverage of the present invention generally has a Brix value of 40 to 60, preferably 45 to 60, more preferably 50 to 60, and most preferably 53 to 58. A concentrate-type beverage having Bx of less than 40 cannot be expected to provide a satisfactory taste when it is ingested (when diluted). When Bx is low, the water activity enhances, and growth inhibitory effects of interest are not occasionally attained. When Bx exceeds 60, the viscosity of the beverage increases, and working efficiency deteriorates.

Examples of sugars and sugar alcohols that can be incorporated into the beverage of the present invention so as to adjust Bx within the above range include: monosaccharides, such as glucose, fructose, xylose, galactose, and isomerized sugar; disaccharides, such as sucrose, maltose, lactose, trehalose, and palatinose; oligosaccharides, such as fructooligosaccharides, maltooligosaccharide, isomaltooligosaccharide, galactooligosaccharide, and coupling sugar; and sugar alcohols, such as erythritol, xylitol, sorbitol, maltitol, lactitol, palatinit, and reduced starch syrup. High-intensity sweeteners, such as sucralose, aspartame, acesulfame potassium, or stevia, may also be used.

The pH level of the beverage of the present invention is not particularly limited, as long as it is within the acidic range. The pH level is generally 3.5 or less, preferably 2.2 to 3.5, more preferably 2.5 to 3.5, further preferably 2.7 to 3.5, and particularly preferably 2.8 to 3.5.

The pH level of the beverage of the present invention can be adjusted within the range described above by a method involving the use of an acidifier, a method involving the use of acidified milk, a method involving the use of fruit juice, or a method conducting two or more methods described above in combination. Examples of acidifiers include: organic acids, such as lactic acid, citric acid, malic acid, tartaric acid, acetic acid, phytic acid, gluconic acid, succinic acid, and fumaric acid; and inorganic acids, such as phosphoric acid. Examples of fruit juice include fruit juice derived from citrus fruits, such as oranges, lemons, and grapefruits. When acidified milk is to be used, the method for preparing acidified milk is as described above. The amounts of the acidifier, acidified milk, and fruit juice used for pH adjustment are not particularly limited, provided that the pH level is brought to the desired level.

In addition to Components (A) to (C) and the aforementioned sugars for adjusting Bx, the beverage of the present invention can comprise other adequate raw materials that are used for general beverage products, provided that effects of interest are retained. For example, the beverage of the present invention can comprise fruit juice or vegetable juice. For example, fruit juice derived from an apple, orange, lemon, grapefruit, melon, grape, banana, peach, or mango can be incorporated. Also, vegetable juice derived from a tomato, carrot, pumpkin, pimento, cabbage, or broccoli can be incorporated. Fruit juice or vegetable juice freshly squeezed from a fruit or vegetable may be used without further processing, or it may be concentrated. Turbid fruit juice or vegetable juice containing an insoluble solid or clear fruit juice or vegetable juice from which insoluble solid has been removed via micro filtration, enzyme treatment, ultrafiltration, or other processing may be used.

Various types of additives approved for beverage products, such as emulsifiers (e.g., sucrose fatty acid ester, glycerine fatty acid ester, or lecithin), thickeners (e.g., soybean polysaccharide, pectin, carrageenan, gellan gum, xanthane gum, or guar gum), antioxidants (e.g., tocopherol, ascorbic acid, or cysteine hydrochloride), aroma chemicals (e.g., a lemon flavor, an orange flavor, a grape flavor, a peach flavor, or an apple flavor), or pigments (e.g., a carotenoid pigment, an anthocyanin pigment, a caramel pigment, or various synthetic dyes) may be added to the beverage of the present invention. In addition, various functional components, such as vitamins or minerals, may be added in expectation of potentiated health functions.

It is necessary for the method for producing the beverage of the present invention to comprise: a step of adding ε-polylysine and at least one member selected from among benzoic acid, p-hydroxybenzoic acid esters, and a salt of either thereof to a raw material of a milk-containing beverage; a step of adjusting the pH level of the beverage to 3.5 or less; and a step of adjusting the Brix value of the beverage to 40 to 60. Other steps are carried out in accordance with conventional methods for producing such beverage. The step of adjusting the pH level of the beverage to 3.5 or less may be carried out by a method involving the use of an acidifier, a method involving the use of acidified milk, a method involving the use of fruit juice, or a method involving the use of two or more such methods in combination, as described above. The step of adjusting the Brix value of the beverage to 40 to 60 can be carried out through adjustment of the amount of sugars to be incorporated or dilution of sugars with water.

A specific example of the method for producing the beverage of the present invention is described. At the outset, sugars are dissolved in milk, ε-polylysine and at least one member selected from among benzoic acid, p-hydroxybenzoic acid esters, and a salt of either thereof are added thereto, the pH level is adjusted, Bx is adjusted, homogenization is carried out in the relevant manner, and a package is then filled with the resultant. Homogenization may be carried out in accordance with a conventional technique using a homogenizer that is generally used for food processing at a pressure of approximately 10 to 20 MPa. Homogenization may be carried out at any temperature, and it can be carried out under general heating conditions. In general, it is preferable that disinfection be carried out before the homogenization treatment or before or after the homogenized product is introduced into the container. Disinfection treatment is not particularly limited, and general techniques, such as retort disinfection, batch disinfection, plate disinfection, or autoclave disinfection can be employed.

Any package may be filled with the beverage of the present invention without particular limitation. Examples of packages include sealed packages made of glass, plastics (e.g., polyethylene terephthalate (PET), polyethylene (PE), and polypropyrene (PP)), paper, aluminum, and steel. Also, the package volume is not limited.

The method for inhibiting the growth of microorganisms in the concentrate-type milk-based acidic beverage of the present invention is carried out by adding ε-polylysine, benzoic acid, and/or p-hydroxybenzoic acid esters to a raw material of a milk-containing beverage, adjusting the pH level of the beverage to 3.5 or less, and adjusting the Brix value of the beverage to 40 to 60. The pH level of the beverage may be adjusted by a method involving the use of an acidifier, a method involving the use of acidified milk, a method involving the use of fruit juice, or a method involving the use of two or more such methods in combination, as described above. The Brix value can be adjusted through adjustment of the amount of sugars to be incorporated or dilution of sugars with water.

Microbial species that are inhibited to grow by the method of the present invention are not particularly limited, provided that such microbial species are bacteria, molds, or yeasts that spoil beverages. Osmotolerant yeasts belonging to the genera *Zygosaccharomyces, Pichia, Debaryomyces, Hansenula,* and *Candida* are preferable, with yeasts belonging to the genus *Zygosaccharomyces* being more preferable. Examples of yeasts belonging to the genus *Zygosaccharomyces* include *Zygosaccharomyces rouxii* and *Zygosaccharomyces bailii,* an example of a yeast belonging to the genus *Pichia* is *Pichia farinose,* examples of yeasts belonging to the genus *Debariomyces* include *Debaryomyces hansenii* and *Debaryomyces globosus,* an example of a yeast belonging to the genus *Hansenula* is *Hansenula anomala,* and examples of yeasts belonging to the genus *Candida* include *Candida tropicalis* and *Candida versatilis.*

### Examples

Hereafter, the present invention is described in greater detail with reference to the examples, although the present invention is not limited to these examples.

### (Example 1)

8.2% Reconstituted skim milk powder was fermented using lactic bacteria at 37°C for 20 hours. The resulting fermented milk was homogenized using a homogenizer, and 519 g of granulated sugar was added to and dissolved in 280 g of the fermented milk. Subsequently, 500 ppm benzoic acid and 150 ppm ε-polylysine (tradename: SunKeeper No. 381; manufactured by San-Ei Gen F.F.I., Inc.) were added to the mixture, and the pH level was adjusted to 2.85 with the aid of a 50 wt% citric acid solution. Thereafter, Brix was adjusted to 55 using ion exchange water to bring the total amount of the solution to 1,000 g at the end. The solution was homogenized, heat-sterilized, filled into a 200-ml PET bottle, and then cooled with water. Thus, the milk-based acidic beverage was produced (citric acid level: 1.05 (w/w%)).

### (Example 2)

A milk-based acidic beverage was produced in the same manner as in Example 1, except that 500 ppm benzoic acid and 50 ppm ε-polylysine were added (citric acid level: 1.05 (w/w%)).

### (Example 3)

A milk-based acidic beverage was produced in the same manner as in Example 1, except that 300 ppm benzoic acid and 150 ppm ε-polylysine were added (citric acid level: 1.05 (w/w%)).

### (Comparative Example 1)

A milk-based acidic beverage was produced in the same manner as in Example 1, except that 500 ppm benzoic acid was added and ε-polylysine was not added (citric acid level: 1.05 (w/w%)).

### (Comparative Example 2)

Granulated sugar (542 g) was added to 450 g of ion exchange water, 500 ppm benzoic acid was added thereto, the pH level was adjusted to 2.85 with the aid of a 50 wt% citric acid solution, and the total amount of the solution was brought to 1,000 g. Thereafter, the solution was heat-sterilized, filled into a 200-ml PET bottle, and then cooled with water. Thus, a milk-free acidic beverage was produced (citric acid level: 0.57 (w/w%)).

Table 1 shows the amounts of benzoic acid and ε-polylysine added to the beverage products prepared in Examples 1 to 3 and Comparative Examples 1 and 2 and property values of the products (i.e., sugar content (Brix), pH, and the milk solids-non-fat).

**[Table 1]**

| | Sugar content | pH | Milk solids-non-fat (%) | ε-Polylysine (ppm) | Benzoic acid (ppm) |
|---|---|---|---|---|---|
| Ex. 1 | 55 | 2.85 | 2.3 | 150 | 500 |
| Ex. 2 | 55 | 2.85 | 2.3 | 50 | 500 |
| Ex. 3 | 55 | 2.85 | 2.3 | 150 | 300 |
| Comp. Ex. 1 | 55 | 2.85 | 2.3 | 0 | 500 |
| Comp. Ex. 2 | 55 | 2.85 | 0 | 0 | 500 |

### (Test Example 1) Yeast growth inhibition test (confirmation of effects influenced by the addition of ε-polylysine)

The beverage samples produced in Examples 1 to 3 and Comparative Example 1 were subjected to tests regarding the effects of yeast growth inhibition. The yeasts stored by Calpis Co., Ltd. (*Zygosaccharomyces bailli*) were cultured in YPD medium (with the addition of 500 ppm benzoic acid), and the culture solution was centrifuged (including two instances of washing) to prepare a yeast cell suspension. The yeast cell suspension was inoculated into the aseptically collected beverage samples to adjust the cell concentration to 10⁴ cells/ml, and stationary culture was carried out at 25°C. Sampling was carried out every week for two weeks after the initiation of culture, the samples were subjected to smear culture in PDA medium at 25°C, and the cell count was determined. The results are shown in Fig. 1.

As shown in Fig. 1, yeast growth was inhibited in the acidified milk beverages to which benzoic acid and ε-polylysine had been added (Examples 1 to 3); however, yeast growth was observed in the milk-based acidic beverage to which benzoic acid had been added alone and to which ε-polylysine had not been added (Comparative Example 1).

### (Test Example 2) Yeast growth inhibition test (effects influenced by milk component)

The beverage samples produced in Example 1 and Comparative Examples 1 and 2 were subjected to tests regarding the effects of yeast growth inhibition in the same manner as in Test Example 1. The results are shown in Fig. 2.

As shown in Fig. 2, effects of yeast growth inhibition were observed in the milk-free acidic beverage (Comparative Example 2) with the addition of benzoic acid alone when ε-polylysine had not been added. In contrast, yeast growth in the milk-containing acidic beverage (Comparative Example 1) was not inhibited with the addition of benzoic acid alone. Thus, it was confirmed that the addition of both benzoic acid and ε-polylysine (Example 1) was effective for yeast growth inhibition.

### (Test Example 3) Yeast growth inhibition test (effects influenced by milk solids-non-fat content and sugar content)

Milk-based acidic beverage products (fermented acidified milk) were prepared in accordance with the method described in Example 1 with or without the addition of benzoic acid and ε-polylysine to a mixture containing fermented milk and granulated sugar in the amounts shown in Table 2 (Examples 4, 5, 8, and 9 and Comparative Examples 3 and 4). Non-fermented milk-based acidic beverage products (non-fermented acidified milk) were produced using non-fat milk powder in the amounts shown in Table 2 below instead of fermented milk (Examples 6 and 7). When producing the beverage products, the pH levels and the sugar content (Brix) thereof were adjusted to the levels shown in Table 2 in the same manner as in Example 1.

**[Table 2]**

| | Ex. 4 | Ex. 5 | Ex. 6 | Ex. 7 | Ex. 8 | Ex. 9 | Comp. Ex. 3 | Comp. Ex. 4 |
|---|---|---|---|---|---|---|---|---|
| Sugar content | 58 | 58 | 58 | 53 | 60 | 60 | 58 | 30 |
| pH | 2.9 | 2.9 | 3.0 | 2.8 | 3.0 | 3.0 | 2.9 | 2.5 |
| Milk solids-non-fat (%) | 1.5 | 2.0 | 2.0 | 3.0 | 3.0 | 4.0 | 2.3 | 4.0 |
| Granulated sugar (g) | 564 | 559 | 556 | 494 | 566 | 555 | 556 | 255 |
| Fermented milk (g) | 183 | 244 | - | - | 385 | 392 | 280 | 392 |
| Non-fat milk powder (g) | - | - | 21 | 32 | - | - | - | - |
| Citric acid | Used as pH adjuster | | | | | | | |
| ε-Polylysine (ppm) | 250 | 250 | 500 | 500 | 750 | 750 | - | 500 |
| Benzoic acid (ppm) | 500 | 500 | 400 | 400 | 600 | 600 | - | 600 |
| Foaming | | | - | - | - | - | + | + |

The beverage samples described above were subjected to tests regarding the effects of yeast growth inhibition in the same manner as in Test Example 1. When the cell count was determined every week, whether or not foaming had occurred in the beverages was inspected, a sample in which foaming had been observed until 28 days after the initiation of culture was evaluated as "+," and the sample in which no foaming had been observed was evaluated as "-." The test results regarding the effects of yeast growth inhibition are shown in Fig. 3, and the test results regarding the occurrence of foaming are shown in Table 2. As is apparent from these results, yeast growth was inhibited in milk-based acidic beverages to which benzoic acid and ε-polylysine had been added, provided that the milk solids-non-fat (SNF) content was in the range from 1.5% to 4.0% by weight (Examples 4 to 9). In contrast, yeast growth and foaming were observed in beverages when benzoic acid and ε-polylysine had not been added and when the sugar content (Brix) had been adjusted to 30 even if benzoic acid and ε-polylysine had been added (Comparative Examples 3 and 4).

### (Test Example 4) Yeast growth inhibition test (effects influenced by sugar content)

Milk-based acidic beverage products were produced in accordance with the method described in Example 1 with or without the addition of benzoic acid or p-hydroxybenzic acid esters and ε-polylysine to a mixture containing fermented milk and granulated sugar in the amounts shown in Table 3 (Examples 10 to 14 and Comparative Examples 3 and 5). The pH levels and the sugar content (Brix) of the beverage products were adjusted to the levels shown in Table 3 in the same manner as in Example 1.

**[Table 3]**

| | Ex. 10 | Ex. 11 | Ex. 12 | Ex. 13 | Ex. 14 | Comp. Ex. 3 | Comp. Ex. 5 |
|---|---|---|---|---|---|---|---|
| Sugar content | 60 | 60 | 58 | 55 | 58 | 58 | 30 |
| pH | 2.9 | 2.9 | 2.9 | 2.9 | 2.9 | 2.9 | 2.9 |
| Milk solids-non-fat (%) | 2.3 | 2.3 | 2.3 | 2.3 | 2.3 | 2.3 | 2.3 |
| Granulated sugar (g) | 576 | 576 | 556 | 524 | 556 | 556 | 275 |
| Fermented milk (g) | 281 | 281 | 280 | 295 | 280 | 280 | 281 |
| Citric acid | Used as pH adjuster | | | | | | |
| ε-Polylysine (ppm) | 50 | 70 | 200 | 500 | 200 | - | 250 |
| Benzoic acid (ppm) | 500 | 700 | 600 | 600 | - | - | 500 |
| p-hydroxybenzoic acid esters (ppm) | - | - | - | - | 600 | - | - |
| Foaming | - | - | - | - | - | + | + |

The beverage samples described above were subjected to tests regarding the effects of yeast growth inhibition and tests regarding the occurrence of foaming in the same manner as in Test Examples 1 and 3. The test results regarding the yeast growth inhibitory effects are shown in Fig. 4, and the test results regarding the occurrence of foaming are shown in Table 3. As is apparent from these results, yeast growth was inhibited in milk-based acidic beverages with high sugar content (Brix) of 50 or higher to which benzoic acid and ε-polylysine had been added (Examples 10 to 14). In contrast, yeast growth and foaming was observed in beverages when benzoic acid and ε-polylysine had not been added and when the sugar content (Brix) was adjusted to 30 even if benzoic acid and ε-polylysine had been added (Comparative Examples 3 and 5).

### (Test Example 5) Yeast growth inhibition test (effects influenced by pH level)

Milk-based acidic beverage products were produced in accordance with the method described in Example 1 with or without the addition of benzoic acid and ε-polylysine to a mixture containing fermented milk and granulated sugar in the amounts shown in Table 4 (Examples 15 to 21 and Comparative Example 3). The pH levels and the sugar content (Brix) of the beverage products were adjusted to the given levels shown in Table 4 in the same manner as in Example 1.

**[Table 4]**

| | Ex. 15 | Ex. 16 | Ex. 17 | Ex. 18 | Ex. 19 | Ex. 20 | Ex. 21 | Comp. Ex. 3 |
|---|---|---|---|---|---|---|---|---|
| Sugar content | 58 | 58 | 58 | 58 | 58 | 58 | 58 | 58 |
| pH | 2.5 | 2.8 | 3.2 | 3.5 | 2.2 | 2.5 | 2.7 | 2.9 |
| Milk solids-non-fat (%) | 2.3 | 2.3 | 2.3 | 2.3 | 2.3 | 2.3 | 2.3 | 2.3 |
| Granulated sugar (g) | 556 | 556 | 556 | 556 | 556 | 556 | 556 | 556 |
| Fermented milk (g) | 280 | 280 | 280 | 280 | 280 | 280 | 280 | 280 |
| Citric acid | Used as pH adjuster | | | | | | | |
| ε-Polylysine (ppm) | 250 | 250 | 250 | 250 | 750 | 750 | 750 | - |
| Benzoic acid (ppm) | 500 | 500 | 500 | 500 | 600 | 600 | 600 | - |
| Foaming | | | | - | - | - | - | + |

The beverage samples described above were subjected to tests regarding the effects of yeast growth inhibition and tests regarding the occurrence of foaming in the same manner as in Test Examples 1 and 3. The test results regarding the yeast growth inhibitory effects are shown in Fig. 5, and the test results regarding the occurrence of foaming are shown in Table 4. As is apparent from these results, yeast growth was inhibited in milk-based acidic beverages with the pH level of 2.2 to 3.5 to which benzoic acid and ε-polylysine had been added (Examples 15 to 21). In contrast, yeast growth and foaming was observed in beverages when benzoic acid and ε-polylysine had not been added, even if the pH level had been within the range described above (Comparative Example 3).

### Industrial Applicability

The present invention is applicable in the field of production of concentrate-type acidic beverages that contain milk.

All publications, patents, and patent applications cited herein are incorporated herein by reference in their entirety.

## Claims

1. A concentrate-type milk-based acidic beverage comprising (A) milk, (B) ε-polylysine, and (C) at least one member selected from among benzoic acid, p-hydroxybenzoic acid esters, and a salt of either thereof, wherein the milk solids-non-fat content is 1.5% to 4.5% by weight and the Brix value is 40 to 60.

2. The milk-based acidic beverage according to claim 1, wherein the pH level of the beverage is 3.5 or less.

3. The milk-based acidic beverage according to claim 1 or 2, wherein the ε-polylysine concentration is 50 to 750 ppm.

4. The milk-based acidic beverage according to any of claims 1 to 3, wherein the concentration of at least one member selected from among benzoic acid, p-hydroxybenzoic acid esters, and a salt of either thereof is 200 to 700 ppm.

5. The milk-based acidic beverage according to any of claims 1 to 4, wherein the milk is acidic milk.

6. The milk-based acidic beverage according to any of claims 1 to 5, which further comprises fruit juice or vegetable juice.

7. The milk-based acidic beverage according to any of claims 1 to 6, which is filled into a package.

8. A method for producing a concentrate-type milk-based acidic beverage, comprising
a step of adding ε-polylysine and at least one member selected from among benzoic acid, p-hydroxybenzoic acid esters, and a salt of either thereof to a raw material of a milk-containing beverage,
a step of adjusting the pH level of the beverage to 3.5 or less, and
a step of adjusting the Brix value of a beverage to 40 to 60.

9. A method for inhibiting the growth of microorganisms in a concentrate-type milk-based acidic beverage, which is **characterized by** comprising adding ε-polylysine and at least one member selected from among benzoic acid, p-hydroxybenzoic acid esters, and a salt of either thereof to a raw material of a milk-containing beverage, adjusting the pH level of the beverage to 3.5 or less, and adjusting the Brix value of a beverage to 40 to 60.

10. The method according to claim 9, wherein the inhibition of the growth of microorganisms is the inhibition of the growth of osmotolerant yeasts after a package is opened.

## Patentansprüche

1. Konzentriertes saures Getränk auf Milchbasis, umfassend (A) Milch, (B) ε-Polylysin und (C) wenigstens ein Element ausgewählt aus Benzoesäure, p-Hydroxybenzoesäureestern und einem Salz von einem davon, wobei der Nichtfett-Milchfeststoffgehalt 1,5 % bis 4,5 % beträgt und der Brix-Wert 40 bis 60 beträgt.

2. Saures Getränk auf Milchbasis gemäß Anspruch 1, wobei der pH-Wert des Getränks 3,5 oder weniger beträgt.

3. Saures Getränk auf Milchbasis gemäß Anspruch 1 oder 2, wobei die Konzentration von ε-Polylysin 50 bis 750 ppm beträgt.

4. Saures Getränk auf Milchbasis gemäß einem der Ansprüche 1 bis 3, wobei die Konzentration wenigstens eines Elements ausgewählt aus Benzoesäure, p-Hydroxybenzoesäureestern und einem Salz von einem davon 200 bis 700 ppm beträgt.

5. Saures Getränk auf Milchbasis gemäß einem der Ansprüche 1 bis 4, wobei die Milch Sauermilch ist.

6. Saures Getränk auf Milchbasis gemäß einem der Ansprüche 1 bis 5, das ferner Fruchtsaft oder Gemüsesaft umfasst.

7. Saures Getränk auf Milchbasis gemäß einem der Ansprüche 1 bis 6, das in eine Verpackung gefüllt ist.

8. Verfahren zum Herstellen eines konzentrierten sauren Getränks auf Milchbasis, umfassend
einen Schritt des Zugebens von ε-Polylysin und wenigstens eines Elements ausgewählt aus Benzoesäure, p-Hydroxybenzoesäureestern und einem Salz von einem davon zu einem Rohmaterial eines milchhaltigen Getränks,
einen Schritt des Einstellens des pH-Werts des Getränks auf 3,5 oder weniger und
einen Schritt des Einstellens des Brix-Werts des Getränks auf 40 bis 60.

9. Verfahren zum Hemmen des Wachstums von Mikroorganismen in einem konzentrierten sauren Getränk auf Milchbasis, **gekennzeichnet durch** Umfassen von Zugeben von ε-Polylysin und wenigstens eines Elements ausgewählt aus Benzoesäure, p-Hydroxybenzoesäureestern und einem Salz von einem davon zu einem Rohmaterial eines milchhaltigen Getränks, Einstellen des pH-Werts des Getränks auf 3,5 oder weniger und Einstellen des Brix-Werts des Getränks auf 40 bis 60.

10. Verfahren gemäß Anspruch 9, wobei das Hemmen des Wachstums von Mikroorganismen das Hemmen des Wachstums von osmotoleranten Hefen nach dem Öffnen einer Verpackung ist.

## Revendications

1. Boisson acide à base de lait et de type concentré, comprenant (A) du lait, (B) de l'ε-polylysine, et (C) au moins un élément choisi parmi l'acide benzoïque, les esters d'acide p-hydroxybenzoïque, et un sel de l'un ou l'autre parmi ceux-ci, dans laquelle la teneur en matière sèche non grasse du lait va de 1,5% à 4,5% en poids et le degré Brix va de 40 à 60.

2. Boisson acide à base de lait selon la revendication 1, dans laquelle le taux de pH de la boisson est de 3,5 ou moins.

3. Boisson acide à base de lait selon la revendication 1 ou 2, dans laquelle la concentration en ε-polylysine va de 50 à 750 ppm.

4. Boisson acide à base de lait selon l'une quelconque des revendications 1 à 3, dans laquelle la concentration en au moins un élément choisi parmi l'acide benzoïque, les esters d'acide p-hydroxybenzoïque, et un sel de l'un ou l'autre parmi ceux-ci, va de 200 à 700 ppm.

5. Boisson acide à base de lait selon l'une quelconque des revendications 1 à 4, dans laquelle le lait est un lait acide.

6. Boisson acide à base de lait selon l'une quelconque des revendications 1 à 5, comprenant en outre du jus de fruit ou du jus de légume.

7. Boisson acide à base de lait selon l'une quelconque des revendications 1 à 6, qui est chargée dans un emballage.

8. Méthode de production d'une boisson acide à base de lait et de type concentré, comprenant
une étape d'addition d'ε-polylysine et d'au moins un élément choisi parmi l'acide benzoïque, les esters d'acide p-hydroxybenzoïque, et un sel de l'un ou l'autre parmi ceux-ci, à une matière première d'une boisson contenant du lait,
une étape d'ajustement du taux de pH de la boisson jusqu'à 3,5 ou moins, et
une étape d'ajustement du degré Brix d'une boisson jusqu'à de 40 à 60.

9. Méthode d'inhibition de la croissance de microorganismes dans une boisson acide à base de lait et de type concentré, qui est **caractérisée en ce qu'**elle comprend l'addition d'ε-polylysine et d'au moins un élément choisi parmi l'acide benzoïque, les esters d'acide p-hydroxybenzoïque, et un sel de l'un ou l'autre parmi ceux-ci, à une matière première d'une boisson contenant du lait, l'ajustement du taux de pH de la boisson jusqu'à 3,5 ou moins, et l'ajustement du degré Brix d'une boisson jusqu'à de 40 à 60.

10. Méthode selon la revendication 9, dans laquelle l'inhibition de la croissance de microorganismes est l'inhibition de la croissance de levures osmotolérantes après l'ouverture d'un emballage.
